# EUROPÄISCHE PATENTSCHRIFT

(11) **EP 3 524 468 B1**
(45) Veröffentlichungstag und Bekanntmachung des Hinweises auf die Patenterteilung: **10.05.2023**
(21) Anmeldenummer: 19150563.5
(22) Anmeldetag: 07.01.2019
(51) Int. Cl.: B60N 2/015, B60N 2/01, B60N 2/30, B60N 2/24

(54) **BODENBEARBEITUNGSMASCHINE MIT STECKBAREM BEDIENSITZ**
SOIL WORKING MACHINE WITH CONNECTIBLE SEAT
MACHINE DE TRAITEMENT DU SOL POURVUE D'UN SIÈGE DE COMMANDE INSÉRABLE

(30) Priorität: 09.02.2018 DE 102018202074
(43) Veröffentlichungstag der Anmeldung: 14.08.2019
(73) Patentinhaber: Wirtgen GmbH, 53578 Windhagen (DE)
(72) Erfinder: Barimani, Cyrus, 53639 Königswinter (DE); Drumm, Stephan, 53545 Ockenfels (DE); Körtgen, Alexander, 53117 Bonn (DE)
(74) Vertreter: Ruttensperger Lachnit Trossin Gomoll

(56) Entgegenhaltungen:
- EP-A2- 2 511 161
- WO-A1-2015/180774
- US-B1- 6 189 573

## Beschreibung

Die vorliegende Erfindung betrifft eine Bodenbearbeitungsmaschine, wie etwa Straßenfräse, Recycler, Stabilisierer oder Surface-Miner, mit einem Fahrwerk und einem vom Fahrwerk getragenen Maschinenrahmen, wobei die Bodenbearbeitungsmaschine eine Arbeitsvorrichtung zur Bodenbearbeitung aufweist und wobei am Maschinenrahmen ein Fahrstand mit einem Bedienpult zur Steuerung wenigstens einer Funktionseinrichtung der Bodenbearbeitungsmaschine vorgesehen ist.

Als eine derartige Bodenbearbeitungsmaschine ist beispielsweise eine Straßengroßfräse mit der Bezeichnung W 210i bekannt. Es handelt sich dabei um eine sogenannte Kaltfräse, deren Arbeitsvorrichtung in Gestalt einer rotierenden, mit Fräsmeißeln bestückten Fräswalze einen sich unter ihr befindenden Boden von der Oberfläche aus abträgt, ohne den Boden zuvor zu erwärmen. Wie bei einer Straßengroßfräse üblich, befindet sich die Fräswalze etwa in der Längsmitte zwischen einem vorderen und einem hinteren Teilfahrwerk der Bodenbearbeitungsmaschine.

Auf dem Fahrstand der bekannten Straßenfräse befindet sich zur Erhöhung des Komforts des Maschinenführers ein Fahrersitz. Der Fahrersitz ist an einem ergonomisch vorteilhaften Ort nahe der Nullseite der Maschine angeordnet. Von seinem Anbringungsort kann der Fahrersitz nicht entfernt und abgesehen von einer Höhenverstellung nicht verschoben werden. Der Fahrersitz kann an seinem Anbringungsort um eine zur Gierachse der Bodenbearbeitungsmaschine parallele Achse, längs welcher auch die Höhenverstellung erfolgt, verdreht werden.

Dann, wenn der Maschinenführer bevorzugt, stehend zu arbeiten, verringert der an einem festen Anbringungsort vorgesehene Fahrersitz den Bewegungsbereich des Maschinenführers. Dies ist vor allem deshalb beachtlich, da Maschinenführer erfahrungsgemäß dann stehend arbeiten, wenn sie sehr diffizile Fräsarbeiten mit geringen Bearbeitungstoleranzen ausführen. Maschinenführer arbeiten dann im Stehen, um in möglichst rascher Folge von unterschiedlichen Stellen des Fahrstands aus von oben auf die Bearbeitungsstelle zu blicken und so die Bodenbearbeitungsmaschine möglichst genau steuern zu können.

Eine gattungsgemäße Bodenbearbeitungsmaschine in Gestalt eines Straßenfertigers mit Einbaubohle ist aus der WO 2015/180774 A1 bekannt. Diese Druckschrift offenbart einen lösbar mit dem Maschinenrahmen des Straßenfertigers verbindbaren vibrationsentkoppelten Arbeitsplatz, welcher gemäß einer ersten Ausführungsform als Sitzarbeitsplatz oder alternativ gemäß einer zweiten Ausführungsform als Steharbeitsplatz ausgestaltet sein kann.

Die Druckschrift EP 2 511 161 A2 offenbart ein Eindecker-Omnibusfahrzeug, dessen Passagierraum mit Wechselsitzen in unterschiedlicher Weise konfiguriert werden kann, um entweder Sitzgruppen miteinander zugewandten Sitzen oder eine gewöhnliche Reihenbestuhlung oder von Sitzen freie Flächen zu schaffen. Die aus der EP 2 511 161 A2 bekannten Wechselsitze sind an ihrem von einer Sitzschale fernliegenden Längsende ihres Sitzfußes durch eine konische Gegenlageranordnung in eine Sitzlageranordnung des Passagierraums mit konischer Ausnehmung steckbar und in der Ausnehmung gegen ein Entnehmen formschlüssig verriegelbar.

Es ist daher Aufgabe der vorliegenden Erfindung, eine Bodenbearbeitungsmaschine der eingangs genannten Art anzugeben, welche dem Maschinenführer grundsätzlich, insbesondere während einer Bodenbearbeitung die Wahl lässt, im Stehen oder im Sitzen zu arbeiten, und welche dem Maschinenführer dann, wenn er sich für ein Arbeiten im Stehen entscheidet, einen möglichst großen Bewegungsraum im Bereich des von ihm zur Maschinenführung zu bedienenden Bedienpults bereitstellt.

Diese Aufgabe wird erfindungsgemäß gelöst durch eine Bodenbearbeitungsmaschine mit allen Merkmalen des Anspruchs 1.

Durch das Vorsehen der Sitzlageranordnung im Bereich des Fahrstands kann der Maschinenführer wahlweise einen Bediensitz, welcher mit einer zur Sitzlageranordnung passenden Gegenlageranordnung ausgerüstet ist, in lösbaren Lagereingriff mit der Sitzlageranordnung bringen, - dann hat der Maschinenführer eine Sitzmöglichkeit auf dem Fahrersitz - oder der Maschinenführer lässt die Sitzlageranordnung ungenutzt, d. h. er stellt keinen Lagereingriff mit der Gegenlageranordnung eines Bediensitzes her und hat somit einen lediglich durch die Größe des Fahrstands vorgegebenen Bewegungsraum, der nicht durch ein von einem Bediensitz eingenommenes Volumen eingeschränkt ist.

Zur Klarstellung: die Aufgabe der vorliegenden Erfindung wird durch eine Bodenbearbeitungsmaschine gelöst, die lediglich die oben genannte Sitzlageranordnung aufweist, ohne dass die Bodenbearbeitungsmaschine notwendigerweise auch einen Bediensitz aufweisen muss. Das bloße Vorsehen der Sitzlageranordnung am Fahrstand schafft bereits die Entscheidungsmöglichkeit für den Maschinenführer wahlweise mit oder ohne Bediensitz zu arbeiten. Der Bediensitz an der Bodenbearbeitungsmaschine selbst ist daher nicht notwendiger Teil der Lösung der genannten Aufgabe, sondern lediglich eine bevorzugte Weiterbildung der Erfindung.

Um sicherzustellen, dass ein sicherer und dauerhafter, aber dennoch lösbarer Lagereingriff zwischen der Sitzlageranordnung der Bodenbearbeitungsmaschine und einer dazu passenden Gegenlageranordnung eines Bediensitzes herstellbar ist, weist die Sitzlageranordnung erfindungsgemäß eine Lageranordnung mit einer Lagerformation auf, welche zum Lagereingriff mit einer Gegenlagerformation eines Bediensitzes ausgebildet ist. "Lösbar" im Sinne der vorliegenden Anmeldung ist der Lagereingriff dann, wenn er ohne Zerstörung der am Lagereingriff beteiligten Bauteile und ohne einen Werkzeugangriff an Verbindungsbauteilen, wie Schrauben, Muttern und dergleichen, lösbar ist.

Die Arbeitsvorrichtung der Bodenbearbeitungsmaschine, insbesondere dann, wenn es sich dabei um eine rotierende Fräswalze mit einer Mehrzahl von nacheinander schlagartig in Eingriff mit dem zu bearbeiten Boden tretenden Fräsmeißeln handelt, ist häufig eine Quelle einer Schwingungsanregung, die den Maschinenrahmen in Vibrationen versetzen kann. Eine unerwünschte Schwingungsanregung eines etwaig verwendeten Bediensitzes während einer Bodenbearbeitung kann dann dadurch verhindert werden, dass die Lageranordnung unter Zwischenanordnung einer Dämpfungsanordnung relativ zum Maschinenrahmen beweglich mit dem Maschinenrahmen verbunden ist.

Grundsätzlich kann vorgesehen sein, dass die Dämpfungsanordnung unmittelbar mit dem Maschinenrahmen verbunden ist. Beispielsweise kann bei der bevorzugten Verwendung einer elastomeren Dämpfungsanordnung die Dämpfungsanordnung unmittelbar an ein Bauteil des Maschinenrahmens angeklebt oder anvulkanisiert sein. Aufgrund einer daraus resultierenden größeren konstruktiven Freiheit ist es jedoch bevorzugt, dass die Sitzlageranordnung eine Befestigungsanordnung aufweist, welche an dem Maschinenrahmen befestigt ist, wobei die Sitzlageranordnung die Dämpfungsanordnung aufweist, welche die Lageranordnung relativ zur Befestigungsanordnung beweglich mit der Befestigungsanordnung verbindet. Dann kann die Sitzlageranordnung als selbstständig handhabbare Anordnung gleich einer vormontierten Baugruppe an einem beliebigen geeigneten Ort des Maschinenrahmens angeordnet sein, wobei aufgrund der bereits in der Sitzlageranordnung vorhandenen Dämpfungsanordnung die Lageranordnung schwingungsmäßig von dem Maschinenrahmen entkoppelt ist.

Bevorzugt ist die Lageranordnung aus Metall hergestellt, besonders bevorzugt aus Stahl. Ebenso bevorzugt ist die Befestigungsanordnung aus Metall hergestellt, beispielsweise aus Stahl oder aus Aluminium. Die Dämpfungsanordnung ist vorzugsweise eine aufgrund von innerer Reibung dämpfende elastomere Dämpfungsanordnung, etwa ein Gummi-Bauteil. Um eine möglichst allseitige homogene Dämpfung der Lageranordnung durch die Dämpfungsanordnung zu erhalten, umgibt vorzugsweise die Dämpfungsanordnung die Lageranordnung längs einer Umfangsbahn vollständig. Um wiederum die Dämpfungsanordnung möglichst stabil und Richtung unabhängig homogen mit dem Maschinenrahmen koppeln zu können, umgibt die Befestigungsanordnung vorzugsweise die Dämpfungsanordnung längs einer Umfangsbahn vollständig.

Alternativ kann auch vorgesehen sein, dass die Dämpfungsanordnung gerade keine homogene Dämpfung, sondern in unterschiedliche Bewegungsrichtungen unterschiedliche Dämpfungswerte bereitstellen soll. Beispielsweise kann daran gedacht sein, für Relativbewegungen zwischen Lageranordnung und Befestigungsanordnung längs der Nickachse andere Dämpfungswertevorzusehen als für Relativbewegungen längs der Rollachse. Hierzu kann die Dämpfungsanordnung in unterschiedlichen Bereichen unterschiedliche Materialien mit unterschiedlichen Dämpfungseigenschaften aufweisen, oder/und sie kann in unterschiedlichen Bereichen unterschiedlich viele oder/und unterschiedlich große Hohlräume aufweisen.

Um für den Lagereingriff eine ausreichende Lagerlänge bereitzustellen, erstreckt sich die Lagerformation bevorzugt längs einer virtuellen Lagerachse und um die Lagerachse herum. Die Lagerachse ist dann Bezugsachse für die zuvor genannte Umfangsbahn. Die Lagerformation kann in beliebiger Weise ausgestaltet sein, um einen Lagereingriff mit der bediensitzseitigen Gegenlagerformation sicher, aber lösbar herzustellen. Beispielsweise kann die Lagerformation ein Gewinde aufweisen, welches mit der Gegenlagerformation verschraubt werden kann. Die Gewindeachse ist dann die virtuelle Lagerachse. Ein Lagereingriff gleicher Betriebssicherheit kann jedoch wesentlich schneller hergestellt werden, wenn die Lagerformation sich längs der Lagerachse verjüngt und vorzugsweise in axialer Richtung längs der Lagerachse rippen- oder/und vorsprungsfrei ist. Der Lagereingriff kann dann nämlich durch bloßes axiales Einstecken oder Aufstecken einer entsprechenden, sich komplementär zur Lagerformation verjüngenden Gegenlagerformation in bzw. auf die Lagerformation erreicht werden. Vor allen Dingen ein Lösen des Lagereingriffs kann dann sehr schnell erfolgen, da aufgrund der verjüngt ausgebildeten Formationen: Lagerformation und Gegenlagerformation, bereits bei geringer axialer Relativbewegung zwischen diesen ein Anlage-Lagereingriff aufgehoben werden kann. Aus Gründen einfacher Bearbeitung und Herstellung ist die Lagerformation vorzugsweise konisch verjüngend ausgebildet. Bevorzugt ist zur Erzielung einer stabilen Lagerung der halbe Öffnungswinkel des Konus der Lagerformation kleiner als 45°. Bevorzugt bildet die Lagerformation die Innenfläche einer negativ-konischen, buchsenartigen Lageranordnung.

Ebenso bevorzugt ist die Lagerformation, wenigstens ein am Lagereingriff beteiligter Abschnitt derselben, rotationssymmetrisch mit der Lagerachse als der Rotationssymmetrieachse. Dann kommt es bei der Herstellung des Lagereingriffs nämlich auf eine Orientierung von Lagerformation und Gegenlagerformation relativ zu einander um die Lagerachse nicht an.

Um dem Maschinenführer während ein und derselben Betriebsphase wahlweise den Einsatz eines Bediensitzes und den Verzicht darauf zu ermöglichen, ist es vorteilhaft, wenn die Bodenbearbeitungsmaschine eine Verstauungslageranordnung aufweist, welche dazu ausgebildet ist, in einen lösbaren Lagereingriff mit einer Gegenlageranordnung eines Bediensitzes gebracht zu werden. Dann kann ein etwaig an der Maschine mitgeführter Bediensitz in Phasen seines Nicht-Gebrauchs mit der Verstauungslageranordnung in Lagereingriff sein. Zur Ingebrauchnahme des Bediensitzes wird sein Lagereingriff mit der Verstauungslageranordnung gelöst und mit der Sitzlageranordnung der Maschine hergestellt. Wird der Bediensitz nicht gebraucht, kann ein mit der Sitzlageranordnung bestehender Lagereingriff gelöst und mit der Verstauungslageranordnung hergestellt werden. Um einen Bediensitz in möglichst kurzer Zeit als Sitzgelegenheit am Fahrstand aktivieren und deaktivieren zu können, ist auch die Verstauungslageranordnung vorzugsweise im Bereich des Fahrstands angeordnet. Die Verstauungslageranordnung kann sich dabei näher an der Quermitte des Fahrstands als an dessen Seitenrändern befinden, wo sich der Maschinenführer während einer Bodenbearbeitung selten oder nie aufhält, so dass ihn der dort verstaute Bediensitz während einer Bodenbearbeitung nicht stört oder einschränkt. Die Sitzlageranordnung befindet sich dagegen bevorzugt längs einer Nickachse der Maschine näher bei den Rändern als in der Quermitte des Fahrstands, wo sich der Maschinenführer während einer Bodenbearbeitung überwiegend aufhalten wird, insbesondere im Bereich der Nullseite der Maschine, bis zu welcher der effektive Arbeitsbereich der Arbeitsvorrichtung - mit Ausnahme einer Sicherheitszone zur Anordnung unvermeidlicher Sicherheitsschilde - längs der Nickachse der Maschine heranreicht.

Der Fahrstand kann mehrere Sitzlageranordnungen aufweisen, um dem Maschinenführer die Möglichkeit zu bieten, einen Bediensitz an unterschiedlichen Orten zu platzieren, oder/und um unterschiedlichen Körpergrößen von Maschinenführern ergonomisch Rechnung zu tragen

Die Verstauungslageranordnung kann, analog zur Sitzlageranordnung, eine Verstauungsanordnung mit einer Verstauungsformation aufweisen, welche zum Lagereingriff mit einer Gegenlagerformation eines Bediensitzes ausgebildet ist. Da ein Maschinenführer dann, wenn sich ein Bediensitz im Lagereingriff mit der Verstauungslageranordnung befindet, den Bediensitz nicht als Sitzgelegenheit verwendet, kann die Verstauungsanordnung starr mit dem Maschinenrahmen verbunden sein. Eine Dämpfungsanordnung, wie sie bevorzugt an der Sitzlageranordnung vorgesehen ist, kann daher an der Verstauungslageranordnung entfallen.

Zur Erhöhung der Bediensicherheit und zur Vermeidung von unnötigen Bedienfehlern können die Verstauungsformation und die Lagerformation je einen gestaltgleichen zum Lagereingriff mit der Gegenlagerformation ausgebildeten Formationsabschnitt aufweisen. Der Maschinenführer muss dann zur Herstellung eines Anlageeingriffs mit der Gegenlagerformation stets die gleiche Handlung vornehmen, beispielsweise lediglich einen Ein- bzw. Aufsteckvorgang der Gegenlagerformation in bzw. auf die Lagerformation oder die Verstauungsformation, um einen entsprechenden Lagereingriff zu bewirken.

Um den Maschinenführer während einer Bodenbearbeitung nicht durch die Schwingungsanregung der Arbeitsvorrichtung zu belasten, weist der Fahrstand erfindungsgemäß einen durch Zwischenanordnung einer Dämpfungsstruktur schwingungsmäßig vom Maschinenrahmen entkoppelten Fahrstandboden auf. Dabei weist der Fahrstandboden erfindungsgemäß weiter eine den Fahrstandboden durchsetzende Sitzlageröffnung auf, welche von der Lageranordnung durchsetzt ist oder/und durch welche hindurch die Lagerformation vom Fahrstand aus erreichbar ist. So ist die Sitzlageranordnung erfindungsgemäß unmittelbar an dem Maschinenrahmen befestigt und ist dennoch vom Fahrstand aus erreichbar. Bevorzugt ist ein fahrstandseitiges Längsende der Lageranordnung bündig mit oder unterhalb einer Fahrstandbodenfläche angeordnet, um Stolperfallen im Fahrstand zu vermeiden. Alternativ oder zusätzlich kann der Fahrstandboden eine den Fahrstandboden durchsetzende Verstauungslageröffnung aufweisen, welche von der Verstauungsanordnung durchsetzt ist oder/und durch welche hindurch die Verstauungsformation vom Fahrstand aus erreichbar ist. Die Lageranordnung oder/und die Verstauungsanordnung sind daher bevorzugt unabhängig vom Fahrstandboden schwingungsmäßig vom Maschinenrahmen entkoppelt.

Auch wenn die Bodenbearbeitungsmaschine zur Lösung der eingangs genannten Aufgabe lediglich die Sitzlageranordnung, gegebenenfalls auch eine Verstauungslageranordnung, aufweist, ist es dennoch bevorzugt, dass die Maschine auch einen Bediensitz aufweist, welcher an der Maschine mitgeführt wird. Ein solcher Bediensitz umfasst eine Sitzschale, einen sich von der Sitzschale längs einer Sitzfußachse weg erstreckenden Sitzfuß und eine zur Verbindung mit der Bodenbearbeitungsmaschine ausgebildete Gegenlageranordnung. Die Gegenlageranordnung umfasst eine Gegenlagerformation, die sich längs einer Gegenlagerachse und um diese herum erstreckt, wobei sich die Gegenlagerformation längs der Gegenlagerachse verjüngt, so dass die Gegenlagerformation bevorzugt durch Ein- oder Aufstecken, besonders bevorzugt längs einer mit der Gegenlagerachse kollinearen und mit der Lagerachse parallelen oder kollinearen Steckbahn, in und außer Lagereingriff mit der Sitzlageranordnung bringbar ist. Bei hergestelltem Lagereingriff sind somit Lagerachse und Gegenlagerachse kollinear. Aufgrund der bevorzugten Konizität von Lageranordnung und Gegenlageranordnung können Lagerachse und Gegenlagerachse zu Beginn der Herstellung eines Lagereingriffs einen Achsversatz aufweisen, welche jedoch durch die am Lagereingriff beteiligten Formationen: Lagerformation und Gegenlagerformation, während der Herstellung des Anlageeingriffs durch Zwangsführung beseitigt wird. Bevorzugt ist die Gegenlagerformation eine positiv-konische Außenfläche einer steckerartigen Gegenlageranordnung.

Die oben genannte Gegenlageranordnung umfasst eine Gegenlagerformation, die sich längs einer Gegenlagerachse und um diese herum erstreckt, wobei sich die Gegenlagerformation längs der Gegenlagerachse verjüngt. Bevorzugt ist die Gegenlagerformation, wenigstens in einem an einem Lagereingriff beteiligten Bereich, rotationssymmetrisch ausgebildet, mit der Gegenlagerachse als der Rotationssymmetrieachse.

Die vorliegende Erfindung wird nachfolgend anhand der beiliegenden Zeichnungen näher erläutert. Es stellt dar:
- Figur 1: eine grobschematische Seitenansicht einer erfindungsgemäßen Bodenbearbeitungsmaschine gemäß einer Ausführungsform der vorliegenden Erfindung,
- Figur 2: eine schematische perspektivische Ansicht einer Bediensitzlagerung der Bodenbearbeitungsmaschine von Figur 1 von einer auf der Nullseite der Maschine, mit Abstand von dieser, oberhalb und vor der Bediensitzlagerung gelegenen Betrachterposition,
- Figur 3: eine schematische perspektivische Explosionsansicht einer Sitzlageranordnung mit dazu passender Gegenlageranordnung.

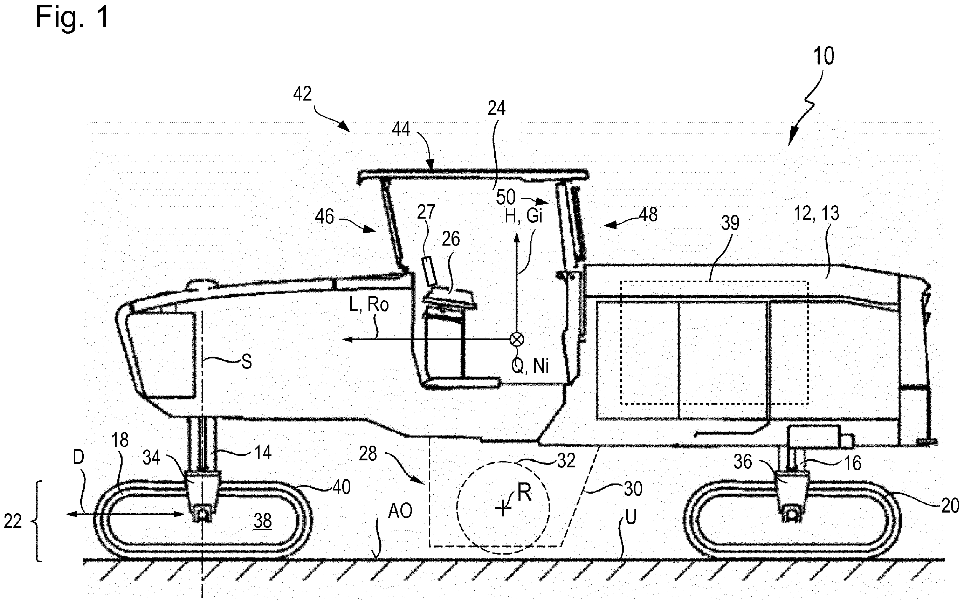

In Figur 1 ist eine erfindungsgemäße Ausführungsform einer Bodenbearbeitungsmaschine in Gestalt einer Boden- oder Straßengroßfräse allgemein mit 10 bezeichnet. Sie umfasst einen Maschinenrahmen 12, welcher das Grundgerüst für einen Maschinenkörper 13 bildet. Der Maschinenkörper 13 umfasst den Maschinenrahmen 12 und mit dem Maschinenrahmen 12 verbundene, gegebenenfalls relativ zu diesem bewegliche Bauteile der Maschine 10.

Der Maschinenkörper 13 umfasst vordere Hubsäulen 14 und hintere Hubsäulen 16, welche einenends mit dem Maschinenrahmen 12 und anderenends mit vorderen Laufwerken 18 bzw. mit hinteren Laufwerken 20 verbunden sind. Der Abstand des Maschinenrahmens 12 von den Laufwerken 18 und 20 ist durch die Hubsäulen 14 und 16 veränderbar.

Die Laufwerke 18 und 20 sind beispielhaft als Kettenlaufwerke dargestellt. Einzelne oder alle Laufwerke 18 oder/und 20 können abweichend hiervon auch Radlaufwerke sein.

Der Betrachter von Figur 1 blickt auf die Bodenbearbeitungsmaschine oder kurz "Maschine" 10 in Richtung der zur Zeichenebene von Figur 1 orthogonalen Maschinenquerrichtung Q. Eine zur Maschinenquerrichtung Q orthogonale Maschinenlängsrichtung ist mit L bezeichnet und verläuft parallel zur Zeichenebene von Figur 1. Eine Maschinenhöhenrichtung H verläuft ebenfalls parallel zur Zeichenebene von Figur 1 und orthogonal zur Maschinenlängs- und zur Maschinenquerrichtung L bzw. Q. Die Pfeilspitze der Maschinenlängsrichtung L in Figur 1 weist in Vorwärtsrichtung. Die Maschinenhöhenrichtung H verläuft parallel zur Gierachse Gi der Maschine 10, die Maschinenlängsrichtung L verläuft parallel zur Rollachse Ro und die Maschinenquerrichtung Q verläuft parallel zur Nickachse Ni.

Die Bodenbearbeitungsmaschine 10 weist einen Fahrstand 24 auf, von dem aus ein Maschinenführer über ein Bedienpult 26 die Maschine 10 steuern kann. Das Bedienpult 26 weist eine Informationsschnittstellenvorrichtung 27 in Gestalt eines Bediendisplays auf.

Unter dem Maschinenrahmen 12 ist eine Arbeitsbaugruppe 28 angeordnet, hier beispielhaft als Fräsbaugruppe 28 mit einer in einem Fräswalzenkasten 30 aufgenommenen Fräswalze 32, die um eine in Maschinenquerrichtung Q verlaufende Fräsachse R rotierbar ist, um damit während einer Bodenbearbeitung Untergrundmaterial ausgehend von der Aufstandsoberfläche AO des Untergrunds U mit einer durch die relative Höhenlage des Maschinenrahmens 12 bestimmten Frästiefe abtragen zu können. Die Fräswalze 32 ist daher eine Arbeitsvorrichtung im Sinne der vorliegenden Anmeldung. Alternativ oder zusätzlich kann die Fräswalze 32 relativ zum Maschinenrahmen 12 höhenverstellbar an diesem aufgenommen sein.

Die Höhenverstellbarkeit des Maschinenrahmens 12 durch die Hubsäulen 14 und 16 dient auch der Einstellung der Fräs- oder allgemein Arbeitstiefe der Maschine 10 bei der Bodenbearbeitung. Es handelt sich bei der beispielhaft dargestellten Bodenbearbeitungsmaschine 10 um eine Großfräse, für die die Anordnung der Fräsbaugruppe 28 in Maschinenlängsrichtung L zwischen den vorderen und den hinteren Laufwerken 18 bzw. 20 typisch ist. Derartige Großfräsen oder auch bodenabtragende Maschinen im Allgemeinen können ein Transportband aufweisen, um abgetragenes Bodenmaterial von der Maschine 10 weg zu transportieren. Ein auch bei der Maschine 10 grundsätzlich vorhandenes Transportband ist aus Gründen besserer Übersichtlichkeit in Figur 1 nicht dargestellt.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 14 bzw. 16 mit jeweils einem damit verbundenen Laufwerk 18 bzw. 20 aufweist. Die vorderen Hubsäulen 14 sind in weiterhin an sich bekannter Weise jeweils mittels einer Laufwerk-Verbindungsstruktur 34, etwa einer das Laufwerk 18 in Maschinenquerrichtung Q übergreifenden Verbindungsgabel, mit den Laufwerken 18 gekoppelt. Die hinteren Hubsäulen 16 sind mit ihrem jeweiligen Laufwerk 20 über eine mit der Laufwerk-Verbindungsstruktur 34 identisch aufgebaute Laufwerk-Verbindungsstruktur 36 verbunden. Die Laufwerke 18 und 20 sind im Wesentlichen identisch aufgebaut und bilden das Fahrwerk 22 der Maschine. Die Laufwerke 18 und 20 sind motorisch angetrieben, in der Regel durch einen nicht dargestellten Hydromotor.

Die Antriebskraftquelle der Maschine 10 bildet eine am Maschinenrahmen 12 aufgenommene Brennkraftmaschine 39. Durch sie wird die Fräswalze 32 im dargestellten Ausführungsbeispiel zur Drehung angetrieben. Durch die Leistung der Brennkraftmaschine 39 wird außerdem an der Maschine 10 ein Hydraulikdruckreservoir bereitgestellt, durch welches Hydromotoren und hydraulische Aktuatoren an der Maschine betreibbar sind. Die Brennkraftmaschine 39 ist somit auch Quelle der Vortriebskraft der Maschine 10.

Das Laufwerk 18 mit einer durch den Doppelpfeil D angedeuteten Laufrichtung weist im dargestellten Beispiel eine radial innere Aufnahme-und Führungsstruktur 38 auf, an der eine umlaufbare Laufkette 40 angeordnet und zur Umlaufbewegung geführt ist.

Die Hubsäule 14 und mit ihr das Laufwerk 18 ist durch eine nicht näher dargestellte Lenkvorrichtung um eine Lenkachse S drehbar. Bevorzugt zusätzlich, aber auch alternativ kann die Hubsäule 16 und mit ihr das Laufwerk 20 durch eine Lenkvorrichtung um eine zur Lenkachse S parallele Lenkachse drehbar sein.

Der Fahrstand 24 ist von einem Schutzdachaufbau 42 bedeckt, welcher ein Schutzdach 44 umfasst, das über eine vordere Scheibenanordnung 46 und eine hintere Wandungsanordnung 48 mit dem Maschinenrahmen 12 bzw. Maschinenkörper 13 verbunden ist. Das Schutzdach 44 ist mittels einer Bewegungsführung 50 heb- und senkbar am Maschinenrahmen 12 angeordnet. In Figur 1 ist das Schutzdach 44 in seiner angehobenen Betriebsstellung gezeigt, in welcher die Maschine 10 für einen Bearbeitungsbetrieb bereit ist.

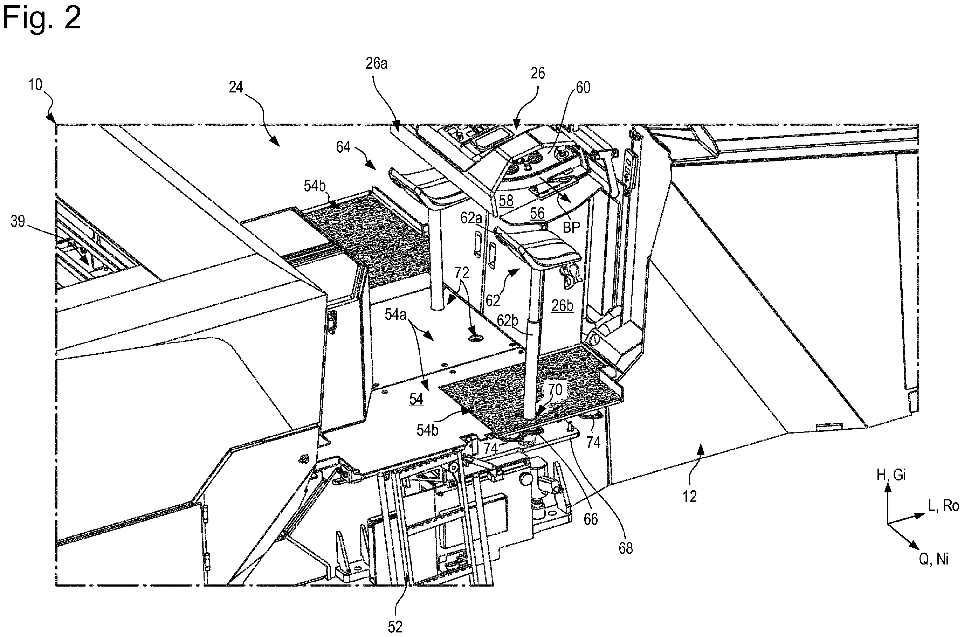

Figur 2 gewährt von einer Betrachterposition, welche sich längs der Nickachse Ni neben der Nullseite, außerhalb der Maschine 10, oberhalb des Fahrstands 24 und hinter diesem befindet, einen Blick auf den Fahrstand 24. Der Fahrstand 24 in Figur 2 ist von seitlichen Geländern und Blenden sowie vom Schutzdachaufbau 42 freigeschnitten, sodass der Blick auf den Fahrstand 24 möglichst unverstellt ist. Der Fahrstand 24 ist in der beispielhaften Darstellung von Figur 2 über eine Leiter 52 auf der Nullseite der Maschine 10 erreichbar.

Der Fahrstand 24 umfasst einen Fahrstandboden 54, welcher starrere Metallplatten, wie etwa Riffelbleche 54a, oder/und nachgiebigere Elastomer-Trittmatten 54b umfassen kann.

Das Bedienpult 26 weist ein durch einen seitlichen Verschlussdeckel 56 verschließbaren Aufnahmeraum 58 auf, aus welchem heraus ein Bedienpaneel 60 aus der in Figur 2 gezeigten Inaktiv-Stellung längs des Pfeils BP in eine vor dem ersten Bediensitz 62 gelegene Aktiv-Stellung gezogen werden kann.

Der Fahrstand 24 zeigt insgesamt zwei Bediensitze, nämlich den bereits erwähnten ersten Bediensitz 62, welcher sich in einer Gebrauchsstellung befindet, und einen zweiten Bediensitz 64, welcher nahe der Quermitte des Fahrstandes 24 unmittelbar hinter dem Bedienpult 26 in einer Nicht-Gebrauchsstellung verstaut ist.

Der erste Bediensitz 62 und der zweite Bediensitz 64 sind identisch aufgebaut, sodass es ausreicht, lediglich einen der beiden Bediensitze zu beschreiben.

Der Bediensitz 62 weist eine Sitzschale 62a und einen von der Sitzschale 62a abstehenden Sitzfuß 62b auf, welcher lösbar in einer Sitzlageranordnung 66 aufgenommen ist. Der Sitzfuß 62b ist beispielhaft als Teleskopfuß dargestellt, der in an sich bekannter Weise durch eine im Inneren des Sitzfußes 62b angeordnete Gasfeder höhenverstellbar ausgestaltet sein kann.

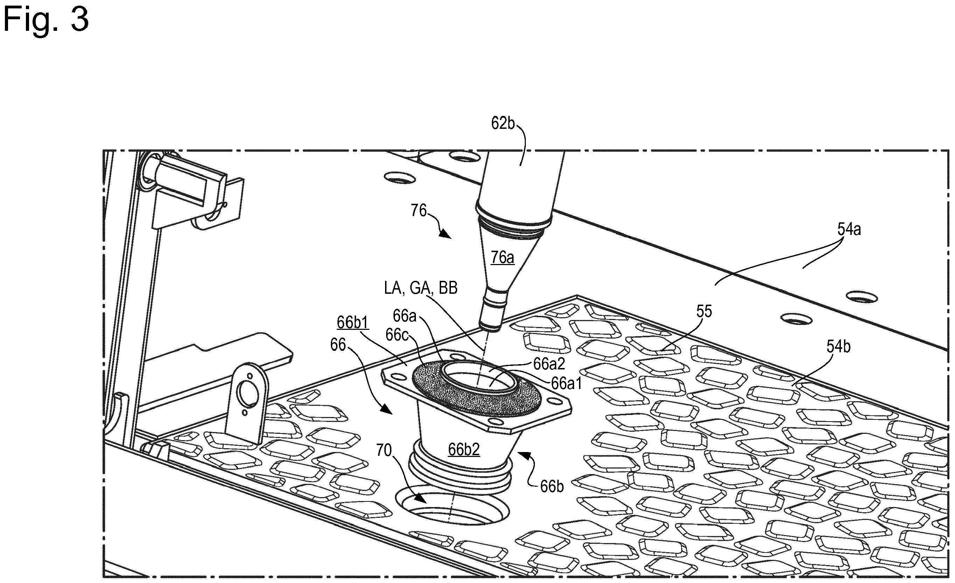

Die Sitzlageranordnung 66 ist an einem Teil, hier: plattenförmigen Teil 68, des Maschinenrahmens 12 befestigt. Der Aufbau der Sitzlageranordnung 66 wird weiter unten im Zusammenhang mit Figur 3 beschrieben werden.

Um die Sitzlageranordnung 66 ausgehend vom Fahrstand 24 erreichen zu können, weist der Fahrstandboden 54 wenigstens eine Sitzlageröffnung 70 auf, welche von dem Sitzfuß 62b durchsetzt ist. Eine zweite Sitzlageröffnung (ohne Bezugszeichen) kann - ähnlich der Sitzlageröffnung 70 im Bereich des Seitenrands der Maschine 10, welcher dem Betrachter der Figur 2 zugewandt ist - nahe des entgegengesetzten Seitenrands der Maschine 10 vorgesehen sein. Die Sitzlageröffnung 70 und die zweite Sitzlageröffnung können spiegelsymmetrisch um eine zur Rollachse Ro und zur Gierachse Gi der Maschine 10 parallele Maschinen-Längsmittelebene angeordnet sein. Die Anordnung von Sitzlageröffnungen richtet sich im Wesentlichen nach der Gestalt des Bedienpults 26 und der vom Bedienpult 26 bereitgestellten Bedienbereiche zur Bedienung desselben. Ist das Bedienpult 26 bezüglich einer zur Rollachse Ro und zur Gierachse Gi der Maschine 10 parallelen Bedienpult-Längsmittelebene spiegelsymmetrisch aufgebaut, bietet sich die spiegelsymmetrische Anordnung von wenigstens zwei Sitzlageröffnungen relativ zur Bedienpult-Längsmittelebene an. Fällt die Bedienpult-Längsmittelebene mit der Maschinen-Längsmittelebene zusammen, sind die Sitzlageröffnungen bevorzugt nicht nur bezüglich des Bedienpults, sondern auch bezüglich der Bodenbearbeitungsmaschine 10 und ihrer jeweiligen Längsmittelebenen spiegelsymmetrisch angeordnet.

Ebenso weist der Fahrstandboden 54 zwei Verstauungslageröffnungen 72 auf, von welchen in der linken der zweite Bediensitz 64 aufgenommen ist. Genauer durchsetzt der Sitzfuß 62b des zweiten Bediensitzes 64 die linke Verstauungslageröffnung 72 in ähnlicher Weise wie dies bereits für den Sitzfuß 62b des ersten Bediensitzes 62 erläutert wurde. Unter den Verstauungslageröffnungen 72 befindet sich jeweils eine Verstauungslageranordnung, die nicht eigens dargestellt ist. Dann, wenn ein Bediensitz 62, 64 in einer Verstauungslageröffnung 72 angeordnet ist, befindet er sich an einer Position nahe am Bedienpult 26 und von einem Auskragbereich 26a desselben überdeckt, sodass der so verstaute Bediensitz, hier: zweiter Bediensitz 64, einen am Fahrstand 24 arbeitenden Maschinenführer nicht weiter stört oder einschränkt. Der Auskragbereich 26a des Bedienpults 26 kragt von einem Bedienpultkörper 26b zum Maschinenheck hin aus. Der Bereich, in dem der zweite Bediensitz 64 auf dem Fahrstand 24 verstaut ist, zählt somit nicht oder nur sehr eingeschränkt zu dem von einem Maschinenführer während seiner Arbeit auf dem Fahrstand unbedingt erreichbaren Bewegungsraum.

Der Fahrstandboden 54 ist über Schwingungsdämpfer 74 schwingungsmäßig vom Maschinenrahmen 12 entkoppelt, um den Maschinenführer während seiner Arbeit auf dem Fahrstand 24 von betriebsbedingt auftretenden Vibrationen zu entlasten. Bei einer Straßenfräse, wie sie beispielhaft in Figur 1 dargestellt ist, ist die Fräswalze 32 Hauptquelle unerwünschter Schwingungen am Fahrstand 24. Die Fräswalze 32 weist in an sich bekannter Weise an ihrer Außenumfangsfläche in den Figuren nicht dargestellte Fräsmeißel auf, welche während einer Bodenbearbeitung durch die Maschine 10 abhängig von der Drehzahl der Fräswalze 32 und abhängig von ihrem Abstand in Umfangsrichtung um die Rotationsachse R der Fräswalze 32 mit zeitlichem Abstand voneinander schlagartig in Eingriff mit dem harten Untergrund U treten, um Material von diesem abzutragen.

In Figur 3 eine Explosionsansicht der Bediensitzlagerung dargestellt. Die eigentlich unter der Elastomer-Trittmatte 54b gelegene Sitzlageranordnung 66 ist über der Sitzlageröffnung 70 dargestellt. Zur besseren Übersicht sind in der Umgebung der Sitzlageranordnung 66 Profilelemente 55 der Elastomer-Trittmatte 54b weggelassen, obwohl sie tatsächlich vorhanden sind.

Die Sitzlageranordnung 66 weist bezüglich einer Lagerachse LA eine radial innere Lageranordnung 66a mit einer Lagerformation 66a1 auf. Die Lageranordnung 66a, welche vorzugsweise aus Stahl hergestellt ist, weist auf ihrer dem Sitzfuß 62b zugewandten Seite zunächst eine zylindrische Eintrittsformation 66a2 auf, an welcher sich längs der Lagerachse LA die negativ-konische Lagerformation 66a1 anschließt. In Richtung von der Eintrittsformation 66a2 weg verjüngt sich die negativ-konische Lagerformation 66a1, d. h. ihr offener Querschnitt wird mit axialem Abstand von der Eintrittsformation 66a2 kleiner.

Die Sitzlageranordnung 66 weist weiter eine Befestigungsanordnung 66b auf, welche sich längs der Lagerachse LA über einen gemeinsamen Axialbereich erstreckt und welche die Lageranordnung 66a längs einer Umfangsbahn um diese herum geschlossen umgibt. Die Befestigungsanordnung 66b ist bevorzugt wiederum aus Metall gebildet, etwa aus Stahl oder aus Aluminium. Sie umfasst einen konischen Abschnitt 66b2 welcher der schwingungsgedämpften Kopplung der Befestigungsanordnung 66b mit der Lageranordnung 66a dient, und umfasst einen Flanschabschnitt 66b1, welcher der Befestigung der Sitzlageranordnung 66 am Maschinenrahmen 12, etwa an dem plattenförmigen Element 68 desselben dient.

Zwischen einer Außenseite der Lageranordnung 66a und einer Innenseite der Befestigungsanordnung 66b, insbesondere des konischen Abschnitts 66b2 derselben, befindet sich ein Ringspalt, welcher mit einer elastomeren Dämpfungsanordnung 66c gefüllt ist. Die elastomere Dämpfungsanordnung 66c umgibt die Lageranordnung 66a radial außen längs einer Umfangsbahn um die Lagerachse LA vollständig und ist selbst wiederum längs einer Umfangsbahn um die Lagerachse LA vollständig von der Befestigungsanordnung 66b umgeben.

In Figur 3 ist axial oberhalb des Sitzlageranordnung 66 das von der Sitzschale 62a fernliegenden Längsende des Sitzfußes des 62b dargestellt. Dieses weist eine Gegenlageranordnung 76 auf. Die Gegenlageranordnung 76 ist mit der Sitzlageranordnung 66 ohne weitere Werkzeuge lösbar in einen sicheren Lagereingriff bringbar, in welchem der Bediensitz 62 ausreichend fest in der Sitzlageranordnung 66 aufgenommen ist, sodass ein Maschinenführer darauf sitzend die Maschine 10 bedienen kann.

Die Gegenlageranordnung 76 erstreckt sich längs einer in Figur 3 zur Lagerachse LA kollinearen Gegenlagerachse GA sowie um diese herum. Die Gegenlageranordnung 76 weist eine Gegenlagerformation 76a auf, welche eine positiv-konische Außenfläche umfasst, die sich längs der Gegenlagerachse GA, die auch eine Längsmittelachse des Sitzfußes 62b ist, in Richtung von der Sitzschale 62a weg verjüngt. Die Gegenlagerformation 76a und die Lagerformation 66a1 weisen identische Konus-Öffnungswinkel auf, sodass ihre Außenflächen flächig in Anlageeingriff aneinander gelangen können. Dieser Anlageeingriff ist der oben bezeichnete Lagereingriff. Sowohl die Lagerformation 66a1 als auch die Gegenlagerformation 76a sind bevorzugt bezüglich der gemeinsamen Lagerachse LA bzw. Gegenlagerachse GA rotationssymmetrisch ausgebildet. Auf eine Winkelorientierung des Bediensitzes 62 bezüglich einer Drehung um die Gegenlagerachse GA kommt es somit für eine Herstellung eines Lagereingriffs zwischen der Gegenlageranordnung 76 und der Sitzlageranordnung 66 nicht an.

Der Bediensitz 62 oder 64 ist somit längs einer einfachen geradlinigen Bewegungsbahn BB, welche in Figur durch die kollinearen Anordnungsachsen LA und GA definiert ist, mit seiner Gegenlageranordnung 76 in die Sitzlageranordnung 66 zur Herstellung eines Lagereingriffs einsteckbar. Ein Lösen des Lagereingriffs erfolgt durch Herausziehen der Gegenlageranordnung 76 aus der Sitzlageranordnung 66 in entgegengesetzte Richtung.

Falls am Fahrstand 24 mehrere mögliche Anordnungsorte für einen Bediensitz 62 in seiner Gebrauchsstellung angedacht sind, kann der Fahrstand 24 eine Mehrzahl von Sitzlageranordnungen 66 und diesen zugeordnete Lageröffnungen 70 aufweisen.

Unter Umständen kann während eines Gebrauchs eines Bediensitzes 62 aufgrund von Selbsthemmung zwischen der buchsenartigen Lagerformation 66a1 und der steckerartigen Gegenlagerformation 76a zur Lösung eines Anlageeingriffs ein kurzer Schlag gegen den Sitzfuß 62b oder gegen die Sitzschale 62a notwendig sein. Ein solcher Schlag kann jedoch manuell ohne Werkzeug ausgeführt werden, sodass zum Lösen eines einmal hergestellten Lagereingriffs zwischen der Sitzlageranordnung 66 und der Gegenlageranordnung 76 kein Werkzeug notwendig ist.

Eine Verstauungslageranordnung unter einer Verstauungsöffnung 72 kann identisch zur Sitzlageranordnung ausgebildet sein. Sie muss jedoch keine Dämpfungsanordnung 66c aufweisen. Die Verstauungslageranordnung kann daher eine einfache kurze Stange sein, die an ihrem einen Längsende eine der Lagerformation 66a1 entsprechende Ausnehmung aufweist.

Ein weiterer Vorteil des in der vorliegenden Anmeldung vorgestellten steckbaren Bediensitzes 62, 64 liegt darin, dass ein um einen Bediensitz befreiter Randbereich des Fahrstands 24 während eines Nicht-Gebrauchs oder während eines Transports der Bodenbearbeitungsmaschine 10 längs der Nickachse Ni verkürzt werden kann, etwa weil seitliche Randbereiche des Fahrstands 24 zur Maschinenquermitte hin einklappbar oder/und einschiebbar ausgebildet sind.

## Patentansprüche

1. Bodenbearbeitungsmaschine (10), wie etwa Straßenfräse (10), Recycler, Stabilisierer oder Surface-Miner, mit einem Fahrwerk (22) und einem vom Fahrwerk (22) getragenen Maschinenrahmen (12), wobei die Bodenbearbeitungsmaschine (10) eine Arbeitsvorrichtung (32) zur Bodenbearbeitung aufweist und wobei am Maschinenrahmen (12) ein Fahrstand (24) mit einem Bedienpult (26) zur Steuerung wenigstens einer Funktionseinrichtung (32, 39) der Bodenbearbeitungsmaschine (10) vorgesehen ist, wobei der Fahrstand (24) einen durch Zwischenanordnung einer Dämpfungsstruktur (74) schwingungsmäßig vom Maschinenrahmen (12) entkoppelten Fahrstandboden (54) aufweist,
**dadurch gekennzeichnet, dass** die Bodenbearbeitungsmaschine (10) im Bereich des Fahrstands (24) eine unmittelbar an dem Maschinenrahmen (12) befestigte Sitzlageranordnung (66) aufweist, welche dazu ausgebildet ist, in einen lösbaren Lagereingriff mit einer Gegenlageranordnung (76) eines Bediensitzes (62, 64) gebracht zu werden, wobei die Sitzlageranordnung (66) eine Lageranordnung (66a) mit einer Lagerformation (66a1) aufweist, welche zum Lagereingriff mit einer Gegenlagerformation (76a) des Bediensitzes (62, 64) ausgebildet ist, wobei der Lagereingriff ohne Zerstörung der am Lagereingriff beteiligten Bauteile und ohne einen Werkzeugangriff an Verbindungsbauteilen lösbar ist, wobei der Fahrstandboden (54) eine den Fahrstandboden (54) durchsetzende Sitzlageröffnung (70) aufweist, welche von der Lageranordnung (66a) durchsetzt ist oder/und durch welche hindurch die Lagerformation (66a1) vom Fahrstand (24) aus erreichbar ist.

2. Bodenbearbeitungsmaschine (10) nach Anspruch 1,
**dadurch gekennzeichnet, dass** die Lageranordnung (66a) unter Zwischenanordnung einer Dämpfungsanordnung (66c) relativ zum Maschinenrahmen (10) beweglich mit dem Maschinenrahmen (10) verbunden ist.

3. Bodenbearbeitungsmaschine (10) nach Anspruch 2,
**dadurch gekennzeichnet, dass** die Sitzlageranordnung (66) eine Befestigungsanordnung (66b) aufweist, welche an dem Maschinenrahmen (10) befestigt ist, wobei die Sitzlageranordnung (66) die Dämpfungsanordnung (66c) aufweist, welche die Lageranordnung (66a) relativ zur Befestigungsanordnung (66b) beweglich mit der Befestigungsanordnung (66b) verbindet.

4. Bodenbearbeitungsmaschine (10) nach Anspruch 2 oder 3,
**dadurch gekennzeichnet, dass** die Lagerformation (66a1) sich längs einer virtuellen Lagerachse (LA) und um die Lagerachse (LA) herum erstreckt, wobei die Lagerformation (66a1) sich längs der Lagerachse (LA) verjüngt, vorzugsweise konisch verjüngt.

5. Bodenbearbeitungsmaschine (10) nach einem der vorhergehenden Ansprüche,
**dadurch gekennzeichnet, dass** die Bodenbearbeitungsmaschine (10) eine Verstauungslageranordnung aufweist, welche dazu ausgebildet ist, in einen lösbaren Lagereingriff mit einer Gegenlageranordnung (76) eines Bediensitzes (62, 64) gebracht zu werden.

6. Bodenbearbeitungsmaschine (10) nach Anspruch 5,
**dadurch gekennzeichnet, dass** sich die Verstauungslageranordnung im Bereich des Fahrstands (24) befindet.

7. Bodenbearbeitungsmaschine (10) nach Anspruch 5 oder 6,
**dadurch gekennzeichnet, dass** die Verstauungslageranordnung eine Verstauungsanordnung mit einer Verstauungsformation aufweist, welche zum Lagereingriff mit einer Gegenlagerformation (76a) eines Bediensitzes (62, 64) ausgebildet ist, wobei bevorzugt die Verstauungsanordnung starr mit dem Maschinenrahmen verbunden ist.

8. Bodenbearbeitungsmaschine (10) nach Anspruch 7,
**dadurch gekennzeichnet, dass** die Verstauungsformation und die Lagerformation (66a1) je einen gestaltgleichen zum Lagereingriff mit der Gegenlagerformation (76a) ausgebildeten Formationsabschnitt aufweisen.

9. Bodenbearbeitungsmaschine (10) nach einem der vorhergehenden Ansprüche,
**dadurch gekennzeichnet, dass** sie einen Bediensitz (62, 64) mit einer Sitzschale (62a), einen sich von der Sitzschale (62a) längs einer Sitzfußachse (GA) weg erstreckenden Sitzfuß (62b) und eine zur Verbindung mit der Bodenbearbeitungsmaschine (10) ausgebildete Gegenlageranordnung (76) aufweist, welche eine Gegenlagerformation (76a) umfasst, die sich längs einer Gegenlagerachse (GA) und um diese herum erstreckt, wobei sich die Gegenlagerformation (76a) längs der Gegenlagerachse (GA) verjüngt, so dass die Gegenlageranordnung (76) bevorzugt durch Ein- oder Aufstecken, besonders bevorzugt längs einer mit der Gegenlagerachse (GA) kollinearen und mit der Lagerachse (LA) parallelen oder kollinearen Steckbahn (BB), in und außer Lagereingriff mit der Sitzlageranordnung (66) bringbar ist.

## Claims

1. An earth working machine (10), for example a road milling machine (10), recycler, stabilizer, or surface miner, having a propelling unit (22) and a machine frame (12) carried by the propelling unit (22), wherein the earth working machine (10) comprises a working apparatus (32) for earth working, and an operator's platform (24), having an operating console (26) for controlling at least one functional device (32, 39) of the earth working machine (10), being provided on the machine frame (12), wherein the operator's platform (24) comprises a platform floor (54) that is vibrationally decoupled from the machine frame (12) by interposition of a damping structure (74), **characterized in that** the earth working machine (10) comprises, in the region of the operator's platform (24), a seat mount arrangement (66) fastened directly onto the machine frame (12) that is embodied to be brought into releasable mounting engagement with a counterpart mount arrangement (76) of an operating seat (62, 64), wherein the seat mount arrangement (66) comprises a mount arrangement (66a) having a mount configuration (66a1) that is embodied for mounting engagement with a counterpart mount configuration (76a) of the operating seat (62, 64), wherein the mounting engagement is releasable without destroying the components involved in the mounting engagement and with no engagement of tools onto connecting components, wherein the operator's platform floor (54) comprises a seat mount opening (70) which passes through the operator's platform floor (54) and which is penetrated by the mount arrangement (66a) or/and through which the mount configuration (66a1) is reachable from the operator's platform (24).

2. The earth working machine (10) according to Claim 1,
**characterized in that** the mount arrangement (66a) is connected to the machine frame (10) movably relative to the machine frame (10), with interposition of a damping arrangement (66c).

3. The earth working machine (10) according to Claim 2,
**characterized in that** the seat mount arrangement (66) comprises a fastening arrangement (66b) that is fastened onto the machine frame (10), the seat mount arrangement (66) comprising the damping arrangement (66c) that connects the mount arrangement (66a) to the fastening arrangement (66b) movably relative to the fastening arrangement (66b).

4. The earth working machine (10) according to Claim 2 or 3,
**characterized in that** the mount configuration (66a1) extends along a virtual mount axis (LA) and around the mount axis (LA), the mount configuration (66a1) tapering, preferably conically tapering, along the mount axis (LA).

5. The earth working machine (10) according to one of the preceding claims, **characterized in that** the earth working machine (10) comprises a stowage mount arrangement that is embodied to be brought into releasable mounting engagement with a counterpart mount arrangement (76) of an operating seat (62, 64).

6. The earth working machine (10) according to Claim 5,
**characterized in that** the stowage mount arrangement is present in the region of the operator's platform (24).

7. The earth working machine (10) according to Claim 5 or 6,
**characterized in that** the stowage mount arrangement comprises a stowage arrangement having a stowage configuration that is embodied for mounting engagement with a counterpart mounting configuration (76a) of an operating seat (62, 64), the stowage arrangement preferably being connected rigidly to the machine frame.

8. The earth working machine (10) according to Claim 7,
**characterized in that** the stowage configuration and the mount configuration (66a1) each comprise a configuration portion of identical conformation embodied for mounting engagement with the counterpart mount configuration (76a).

9. The earth working machine (10) according to one of the preceding claims, **characterized in that** it comprises an operating seat (62, 64) having a seat shell (62a), a seat post (62b) that extends away from the seat shell (62a) along a seat post axis (GA), and a counterpart mount arrangement (76) embodied for connection to the earth working machine (10), which arrangement encompasses a counterpart mount configuration (76a) that extends along and around a counterpart mount axis (GA), the counterpart mount configuration (76a) tapering along the counterpart mount axis (GA) so that the counterpart mount configuration (76) can be brought into and out of mounting engagement with the seat mount arrangement (66) preferably by insertion or removal, particularly preferably along a placement path (BB) that is collinear with the counterpart mount axis (GA) and parallel to or collinear with the mount axis (LA).

## Revendications

1. Machine de travail du sol (10), telle qu'une fraiseuse routière (10), un recycleur, un stabilisateur ou un surface-miner, avec un train de roulement (22) et un châssis de machine (12) porté par le train de roulement (22), dans lequel la machine de travail du sol (10) présente un dispositif de travail (32) pour le travail du sol et un poste de conduite (24) avec un pupitre de commande (26) pour la commande d'au moins un dispositif fonctionnel (32, 39) de la machine de travail du sol (10), dans lequel le poste de conduite (24) présente un plancher de poste de conduite (54) découplé du châssis de machine (12) en termes de vibrations par l'intermédiaire d'une structure d'amortissement (74),
**caractérisée en ce que** la machine de travail du sol (10) présente, dans la zone du poste de conduite (24), un agencement de palier de siège (66) fixé directement sur le châssis de machine (12), lequel est adapté pour être amené en prise de palier amovible avec un agencement de palier antagoniste (76) d'un siège de commande (62, 64), dans lequel l'agencement de palier de siège (66) présente un agencement de palier (66a) avec une formation de palier (66a1) qui est destinée à la prise de palier avec une formation de palier antagoniste (76a) du siège de commande (62, 64), dans lequel la prise de palier peut être libérée sans destruction des composants participant à la prise de palier et sans une attaque par outil sur des composants de liaison, dans lequel le plancher du poste de conduite (54) présente une ouverture de palier de siège (70) traversant le plancher du poste de conduite (54), laquelle est traversée par l'agencement de palier (66a) ou/et à travers laquelle V la formation de palier (66a1) peut être atteinte depuis le poste de conduite (24).

2. Machine de travail du sol (10) selon la revendication 1,
**caractérisée en ce que** l'agencement de palier (66a) est relié au châssis de machine (10) de manière mobile par rapport au châssis de machine (10) avec interposition d'un agencement d'amortissement (66c).

3. Machine de travail du sol (10) selon la revendication 2,
**caractérisée en ce que** l'agencement de palier de siège (66) comprend un agencement de fixation (66b) qui est fixé au châssis de machine (10), dans lequel l'agencement de palier de siège (66) comprend l'agencement d'amortissement (66c) qui relie l'agencement de palier (66a) à l'agencement de fixation (66b) de manière mobile par rapport à l'agencement de fixation (66b).

4. Machine de travail du sol (10) selon la revendication 2 ou 3,
**caractérisée en ce que** la formation de palier (66a1) s'étend le long d'un axe de palier virtuel (LA) et autour de l'axe de palier (LA), dans lequel la formation de palier (66a1) se rétrécit le long de l'axe de palier (LA), de préférence se rétrécit de manière conique.

5. Machine de travail du sol (10) selon l'une des revendications précédentes, **caractérisée en ce que** la machine de travail du sol (10) comprend un agencement de palier de rangement adapté pour être amené en prise de palier amovible avec un agencement de palier antagoniste (76) d'un siège d'opérateur (62, 64).

6. Machine de travail du sol (10) selon la revendication 5,
**caractérisée en ce que** l'agencement de palier de rangement se trouve dans la zone du poste de conduite (24).

7. Machine de travail du sol (10) selon la revendication 5 ou 6,
**caractérisée en ce que** l'agencement de palier de rangement comprend un agencement de rangement avec une formation de rangement adaptée pour venir en prise de palier avec une formation de palier antagoniste (76a) d'un siège d'opérateur (62, 64), dans lequel de préférence l'agencement de rangement est relié rigidement au châssis de machine.

8. Machine de travail du sol (10) selon la revendication 7,
**caractérisée en ce que** la formation de rangement et la formation de palier (66a1) présentent chacune une section de formation de même forme pour l'engagement de palier avec la formation de palier antagoniste (76a).

9. Machine de travail du sol (10) selon l'une des revendications précédentes, **caractérisée en ce qu'elle** comprend un siège d'opérateur (62, 64) ayant une coque de siège (62a), un pied de siège (62b) s'étendant à partir de la coque de siège (62a) le long d'un axe de pied de siège (GA), et un agencement de palier antagoniste (76) adapté pour être relié à la machine de travail du sol (10), dans lequel l'agencement de palier antagoniste comprend une formation de palier antagoniste (76a) s'étendant le long et autour d'un axe de palier antagoniste (GA), dans lequel la formation de palier antagoniste (76a) se rétrécit le long de l'axe de palier antagoniste (GA), de sorte que l'agencement de palier antagoniste (76) peut être mis en prise avec l'agencement de palier de siège (66) et hors de prise avec celui-ci, de préférence par insertion ou emboîtement, en particulier le long d'une voie d'emboîtement (BB) colinéaire à l'axe de palier antagoniste (GA) et parallèle ou colinéaire à l'axe de palier (LA).
